Europäisches Patentamt

European Patent Office

Office européen des brevets

(11) Veröffentlichungsnummer: **0 331 023 B1**

(12) **EUROPÄISCHE PATENTSCHRIFT**

(45) Veröffentlichungstag der Patentschrift: **06.10.93**

(51) Int. Cl.5: **F28F 21/06**, F28F 9/18

(21) Anmeldenummer: **89103223.7**

(22) Anmeldetag: **24.02.89**

(54) **Verfahren zur Herstellung eines Rohrbodens für Wärme- und/oder Stoffaustauscher.**

(30) Priorität: **01.03.88 DE 3806517**

(43) Veröffentlichungstag der Anmeldung:
**06.09.89 Patentblatt 89/36**

(45) Bekanntmachung des Hinweises auf die
Patenterteilung:
**06.10.93 Patentblatt 93/40**

(84) Benannte Vertragsstaaten:
**DE FR IT NL**

(56) Entgegenhaltungen:
EP-A- 0 168 558
DE-A- 3 418 201
DE-U- 8 611 642
FR-A- 1 542 364
GB-A- 1 107 843

PATENT ABSTRACTS OF JAPAN, Band 8, Nr.
227 (M-332)[1664], 18. Oktober 1984;& JP-A-59
109 792 (MATSUSHITA DENKI SANGYO K.K.)
25-06-1984

(73) Patentinhaber: **Akzo N.V.**
**Postbus 9300**
**Velperweg 76**
**NL-6800 SB Arnhem(NL)**

(72) Erfinder: **Gemeinhardt, Hermann**
**Rosenstrasse 32**
**D-8753 Obernburg(DE)**
Erfinder: **Hoff, Elmar**
**Südrand 11**
**D-4630 Bochum 6(DE)**
Erfinder: **Schürmann, Erich, Dr.**
**Wittenberg 1**
**D-4401 Senden-Horst(DE)**

(74) Vertreter: **Fett, Günter**
**Akzo Patente GmbH,**
**Postfach 10 01 49**
**D-42097 Wuppertal (DE)**

**Beschreibung**

Die Erfindung bezieht sich auf ein Verfahren zur Herstellung eines spritzgegossenen Rohrbodens aus thermoplastischem Kunststoff für Wärme- und/oder Stoffaustauscher nach dem oberbegriff des Patentanspruches.

Bei der Herstellung von Wärme- und/oder Stoffaustauschern welche eine größere Anzahl von Rohren enthalten, werden in der Regel Rohrböden mit durchgehenden Öffnungen verwendet, in die die Rohrenden eingefädelt und mit dem Rohrboden verbunden werden. Speziell im Rohrbodenbereich wurden verschiedene Verfahren entwickelt, um die Rohrenden möglichst kompakt anzuordnen. Je dichter die Rohrenden nebeneinander angeordnet werden, desto schwieriger wird es, die Rohrenden mit dem Rohrboden derart zu verbinden, daß eine dichte Verbindung auch unter höheren Drücken gewährleistet ist.

Zur dichten Verbindung möglichst kompakt angeordneter Rohrenden wurde für Wärmetauscher, deren Rohre keine oder nur geringe Porosität aufweisen, ein Verfahren entwickelt, bei dem die Rohrenden dicht aneinander gelegt werden und über Wärmestrahlung miteinander verbunden werden (DE-A- 36 14 339). Bei etwas weniger kompakt angeordneten Rohrenden für Wärme- und/oder Stoffaustauscher, kann ebenfalls über Wärmestrahlung eine Verbindung zwischen den Rohrenden dadurch erreicht werden, daß jedes Rohrende in eine Hülse eingefädelt wird, und die Hülsen dicht nebeneinander gelegt werden (DE-A- 36 14 342).

Speziell bei den letztgenannten Wärme- und/oder Stoffaustauschern (DE-A- 36 14 342) ist sehr viel Positionierarbeit bei deren Herstellung erforderlich, indem sowohl Hülsen als auch Rohrenden während der Wärmestrahlungsbehandlung in Position gehalten werden müssen. Zur besseren Handhabung wäre es günstig, wenn zunächst alle Hülsen miteinander verbunden würden, bevor die Rohrenden in den nunmehr verbundenen Hülsen positioniert werden. Noch günstiger wäre es, wenn ein Formkörper, der einem aus miteinander verbundenen Hülsen bestehenden Formkörper ähnlich sieht, hergestellt werden könnte. Hierbei ist jedoch zu beachten, daß die minimale Stegbreite zwischen benachbarten Öffnungen des Rohrbodens, die im Falle von kreisförmigen Öffnungen auf einer gedachten Verbindungslinie zwischen den Mittelpunkten dieser benachbarten Öffnungen liegt, größenordnungsmäßig im Bereich der Wandstärke der Rohrenden liegt, um bei der Wärmeübertragung über Wärmestrahlung ein gleichmäßiges Anschmelzen von Rohrboden und Rohrenden zu erreichen. Nur durch gleichmäßiges Anschmelzen von Rohrboden und Rohrenden wird eine dichte Verbindung zwischen Rohrboden und Rohrenden erreicht.

Da bei derartigen Stoff- und/oder Wärmetauschern in der Regel Rohre mit einem Außendurchmesser von 3 mm und einer Wandstärke von 0,4 mm oder weniger verwendet werden, sollte also auch die minimale Stegbreite zwischen benachbarten Öffnungen höchstens 0,4 mm betragen. Insbesondere dann, wenn 25 Rohre oder mehr (bis zu mehreren tausend) in einem einzigen Wärme- und/oder Stoffaustauscher eingesetzt werden, konnte ein Formkörper mit derartig geringen minimalen Stegbreiten und derart geringen Querschnittsdimensionen für die durchgehenden Öffnungen aus thermoplastischem Kunststoff bisher nicht über Spritzgießen hergestellt werden. Beim Spritzgießen handelt es sich bekanntlich um Verfahren, bei dem thermoplastischer Kunststoff in eine Spritzgußform eingeführt und unter Druck abgekühlt wird. Die für den Erhalt der durchgehenden Öffnungen erforderlichen Nadeln in der Spritzgußform sind aufgrund der geringen Querschnittsdimension (3 mm Durchmesser oder weniger) nicht mehr stabil, und verbiegen sich infolge der zwischen ihnen fließenden Schmelze, so daß die Einhaltung exakter Stegbreiten nicht mehr möglich ist, die Öffnungen sogar teilweise ineinander übergehen. Insbesondere bei Rohrböden mit 25 Öffnungen und mehr kann bei diesen geringen Stegbreiten nicht gewährleistet werden, daß die Schmelze die Spritzgießform vollständig ausfüllt.

Der Erfindung liegt die Aufgabe zugrunde, ein Verfahren zur Herstellung eines spritzgegossenen Rohrbodens aus thermoplastischem Kunststoff für Wärme- und/oder stoffaustauscher mit mindestens 25 durchgehenden Öffnungen zur Aufnahme von Rohrenden, bei dem die Öffnungen einen hydraulischen Durchmesser von höchstens 3 mm aufweisen, durch Zuführen einer Schmelze aus thermoplastischem Werkstoff in eine Spritzgußform, wobei in der Spritzgußform für jede durchgehende Öffnung des herzustellenden Rohrbodens eine Nadel angeordnet ist, zur Verfügung zu stellen, mit welchen eine kompakte Anordnung der Rohrenden möglich und gleichzeitig der Arbeitsaufwand stark vermindert wird.

Die Aufgabe wird dadurch gelöst, daß zur Erreichung einer minimalen Stegbreite von höchstens 0,4 mm zwischen benachbarten Öffnungen die Schmelze zunächst über die Querschnittsfläche verteilt wird, bevor sie in den Bereich der Nadeln gepreßt wird, und daß nach dem Erkalten die aufgrund der Querschnittsverteilung entstandene Scheibe abgetrennt wird.

Zur Querschnittsverteilung der Schmelze reicht es überraschenderweise aus, wenn oberhalb der Nadeln ein Freiraum von wenigen Millimetern in der Spritzgußform vorhanden ist, welcher sich im wesentlichen über den Rohrbodenquerschnitt erstreckt. Die Schmelze füllt hierbei wegen des geringeren Strömungswiderstandes zunächst diesen Freiraum und fließt dann im wesentlichen in Richtung der Nadeln zwischen die Nadeln, so daß sich eine stark reduzierte Querbelastung der Nadeln ergibt.

Bei dem erfindungsgemäßen Verfahren hat sich die Verwendung von thermoplastischen Kunststoffen wie PVDF bestens bewährt.

Bekanntlich ist der hydraulische Durchmesser $d_h$ definiert als Quotient der vierfachen Innenquerschnittsfläche der Öffnungen geteilt durch den Innenumfang (siehe hierzu Dubbel, Taschenbuch für Maschinenbau, 23. Auflage, 1970, Seite 314, Absatz 4):

$$d_h = 4 \cdot \underline{\frac{Innenquerschnittsfläche}{Innenumfang}}$$

Im Falle von Öffnungen mit kreisrundem Querschnitt ergibt sich der hydraulische Durchmesser $d_h$ als der Durchmesser dieser Öffnung. Der Begriff hydraulischer Durchmesser wurde gewählt, weil auch Öffnungen mit nicht kreisförmigem Querschnitt (elliptisch, rechteckig etc.) erforderlich sein können, wenn Rohre mit entsprechendem Außenquerschnitt verwendet werden.

Unter minimaler Stegbreite zwischen benachbarten Öffnungen wird der geringste Abstand zwischen den Wandungen benachbarter Öffnungen verstanden.

Aufgrund des erfindungsgemäßen Verfahrens wird es möglich, einen nach diesem Verfahren hergestellten spritzgegossenen Rohrboden aus thermoplastischem Kunststoff für Wärme- und/oder Stoffaustauscher mit mindestens 25 Öffnungen zur Aufnahme von Rohrenden, wobei die über Spritzgießen hergestellten Öffnungen einen hydraulischen Durchmesser von höchstens 3 mm aufweisen, und wobei zwischen benachbarten Öffnungen die minimale Stegbreite höchstens 0,4 mm beträgt, zur Verfügung zu stellen.

Bevorzugt weisen die Öffnungen des spritzgegossenen Rohrbodens einen hydraulischen Durchmesser von höchstens 2 mm, insbesondere höchstens 1,7 mm auf. Um eine kompakte Anordnung zu erreichen, weist ein solcher Rohrboden günstigerweise eine minimale Stegbreie von höchstens 0,3 mm, bevorzugt etwa 0,2 mm auf.

Die Dicke des Rohrbodens liegt vorteilhaft zwischen 3 und 10 mm, wobei sich eine Dicke von 5 bis 8 mm als günstig hinsichtlich der Herstellbarkeit und der Stabilität des Rohrbodens herausgestellt hat.

Die erfindungsgemäß hergestellten Rohrböden werden bevorzugt für die Herstellung von Wärme- und/oder Stoffaustauschern verwendet, wobei diese sowohl für die Überströmungsfiltration (crossflow-filtration) wie auch für die Durchströmungsfiltration (dead-end-filtration) eingesetzt werden können. Bei der Durchströmungsfiltration können die Rohrenden beidseitig mit je einem Rohrboden verbunden werden, wobei der eine Rohrboden verschlossen wird. Hierzu eignet sich besonders ein Rohrboden, bei dem, wie weiter unten beim Herstellverfahren beschrieben, die aufgrund der Querschnittsverteilung der Schmelze entstandene Scheibe nicht abgetrennt wird. Die Rohre können bei der Durchströmungsfiltration auch nur einseitig mit einem erfindungsgemäßen Rohrboden verbunden werden, wobei dann die freien Enden der Rohre dann, beispielsweise durch Verschweißen, verschlossen werden. Für eine Durchströmungsfiltration können auch die Rohre U-förmig gebogen werden und beide Enden jeweils in (verschiedene) Öffnungen eines einzigen Rohrbodens eingeführt und mit dem Rohrboden verbunden werden.

Die Erfindung wird anhand der nachfolgenden Figuren näher erläutert.

Es zeigen:

Figur 1    eine Draufsicht auf einen Ausschnitt eines erfindungsgemäß hergestellten Rohrbodens,

Figur 2    den Schnitt A-A der Figur 1.

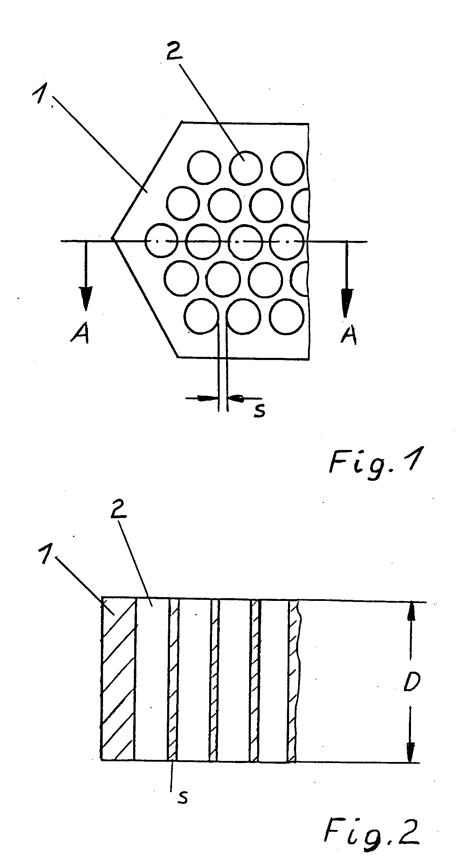

In den Figuren 1 und 2 ist der Übersichtlichkeit halber lediglich ein Ausschnitt aus einem erfindungsgemäß hergestellten Rohrboden dargestellt, wobei zur Verdeutlichung der Ausschnitt stark vergrößert dargestellt ist. Hierbei wird mit 1 der Rohrboden und mit 2 die durchgehenden Öffnungen des Rohrbodens bezeichnet. Zur Erläuterung wurde in den Figuren die minimale Stegbreite mit s und die Dicke des Rohrbodens mit D bezeichnet. Bei dem beanspruchten Rohrboden ist in Wirklichkeit der hydraulische Durchmesser der durchgehenden Öffnungen höchstens 3 mm, vorzugsweise höchstens 2 mm, die minimale Stegbreite s höchstens 0,4 mm, vorzugsweise höchstens 0,3 mm bzw. 0,2 mm und die Dicke D des Rohrbodens 1 zwischen 3 und 10 mm, vorzugsweise zwischen 5 und 8 mm.

**Patentansprüche**

1. Verfahren zur Herstellung eines spritzgegossenen Rohrbodens aus thermoplastischem Kunststoff für Wärme-und/oder Stoffaustauscher mit mindestens 25 durchgehenden Öffnungen (2) zur Aufnahme von Rohrenden, bei dem die Öffnungen (2) einen hydraulischen Durchmesser von höchstens 3 mm aufweisen, durch Zuführen einer Schmelze aus thermoplastischem Werkstoff in eine Spritzgußform, wobei in der Spritzgußform für jede durchgehende Öffnung des herzustellenden Rohrbodens eine Nadel angeordnet ist, dadurch gekennzeichnet, daß zur Erreichung einer minimalen Stegbreite (s) von höchstens 0,4 mm zwischen benachbarten Öffnungen (2) die schmelze zunächst über die Querschnittsfläche verteilt wird, bevor sie in den Bereich der Nadeln gepreßt wird, und daß nach dem Erkalten die aufgrund der Querschnittsverteilung entstandene Scheibe abgetrennt wird.

**Claims**

1. Process for manufacturing an injection-moulded tube base from thermoplastic material for heat- and/or substance exchangers, having at least 25 through-apertures (2) for receiving tube ends, the apertures (2) having a hydraulic diameter of at most 3 mm, by feeding a melt of thermoplastic material into an injection mould, in which case for each through-aperture of the tube base to be manufactured a needle is disposed in the injection mould, characterised in that, in order to achieve a minimal web width (s) of at most 0.4 mm between adjacent apertures (2) the melt is first distributed over the cross-sectional area before being forced into the region of the needles, and in that, after cooling, the disc formed as a result of the cross-sectional distribution is removed.

**Revendications**

1. Procédé de fabrication d'une plaque tubulaire en matière thermoplastique moulée par injection destinée à des échangeurs de chaleur ou de matières, comportant au moins 25 ouvertures (2) débouchantes recevant des extrémités de tubes et dans laquelle les ouvertures (2) ont un diamètre hydraulique de 3 mm maximum, procédé selon lequel on introduit de la matière thermoplastique en fusion dans un moule de moulage par injection, une aiguille étant disposée à l'intérieur du moule pour chacune des ouvertures débouchantes à réaliser dans la plaque tubulaire à fabriquer, procédé caractérisé par le fait que, pour obtenir une largeur de cordon minimale de 0,4 mm maximum entre des ouvertures (2) voisines, on répartit la matière en fusion sur l'ensemble de la surface de la section avant de l'injecter dans la région des aiguilles et par le fait que l'on sépare après refroidissement la plaque obtenue par la répartition de la matière sur l'ensemble de la surface.

Fig.1

Fig.2